# EUROPEAN PATENT SPECIFICATION

(11) **EP 1 887 032 B1**
(45) Date of publication and mention of the grant of the patent: **02.11.2011**
(21) Application number: 06747195.3
(22) Date of filing: 31.05.2006
(51) Int. Cl.: C08J 9/14, C08K 3/18, C08K 5/34, C08L 61/06, C08J 9/00

(54) **EXPANDABLE RESOL-TYPE PHENOLIC RESIN MOLDING MATERIAL AND PHENOLIC RESIN FOAM**
PHENOLHARZ VOM RESOLTYP ENTHALTENDE EXPANDIERBARE FORMMASSE UND PHENOLHARZSCHAUMSTOFF
MATERIAU POUR MOULAGE DE RESINE PHENOLIQUE EXPANSIBLE DE TYPE RESOL ET MOUSSE DE RESINE PHENOLIQUE

(30) Priority: 01.06.2005 JP 2005161771
(43) Date of publication of application: 13.02.2008
(73) Proprietor: Asahi Organic Chemicals Industry Co., Ltd., Nobeoka-shi, Miyazaki 882-8688 (JP)
(72) Inventor: TAKAHASHI, Hiroo, 274-0065, Chiba (JP); KATO, Toshiyuki, Koriyama-shi, Fukushima 963-8041 (JP); NONAKA, Takashi, Koriyama-shi, Fukushima 963-8071 (JP); UEDA, Yasuhiro, c/o Asahi Organic Chem. Ind. Co., Ltd., Niwa-gun, Aichi 480-0105 (JP)
(74) Representative: Albrecht, Thomas
(86) International application number: PCT/JP2006/311359
(87) International publication number: WO 2006/129856

(56) References cited:
- GB-A- 1 098 029
- GB-A- 1 248 364
- GB-A- 1 272 016
- JP-A- 02 222 429
- JP-A- 06 340 763
- JP-A- 2005 015 725

## Description

### Technical Field

The present invention relates to an expandable or foamable resol-type phenolic resin molding or forming material and a phenolic resin foam or foamed material or article. More specifically, the present invention relates to an expandable or foamable resol-type phenolic resin forming material that gives a phenolic resin foamed material or article which is excellent in strength and improved in brittleness and which has a high pH as compared with conventional materials or articles and has an excellent anti-corrosion property against a contact member, and a phenolic resin foamed material or article having the above properties, obtained by foaming the same.

### Background Art

Being excellent in the property of heat insulation and the properties of flame retardancy and fire resistance, a phenolic resin foamed article is conventionally used as a heat-insulating material in the industrial fields of construction and some others.

Meanwhile, the production of a phenolic resin foamed article generally employs a method in which a foamable phenolic resin forming material containing at least a phenolic resin, a blowing agent and a curing agent is foamed and cured, and the above curing agent is selected from acid curing agents such as sulfuric acid or organic acids such as benzenesulfonic acid, toluenesulfonic acid, xylenesulfonic acid, etc. Since the thus-obtained phenolic resin foamed article hence contains the above acid curing agent, this curing agent is extracted with water when the article is wetted, for example, with rains. As a result, there is caused a problem that when a metal object is in contact with the above phenolic resin foamed article or a metal object is present in the vicinity of the above foamed article, such a metal object is susceptible to corrosion.

On the other hand, a phenolic resin foamed article is used in various fields, and it is sometimes required to have high mechanical strength, in particular low brittleness, for use in some fields. Actually, however, there has been hitherto known almost no phenolic resin foamed article that is excellent in mechanical strength and freedom from brittleness and that has excellent anti-corrosion property against a contact member.

### Disclosure of the Invention

Under the circumstances, it is an object of the present invention to provide a foamable phenolic resin forming material that gives a phenolic resin foamed material or article which is excellent in strength and improved in brittleness and which has a high pH as compared with conventional materials or articles and has an excellent anti-corrosion property against a contact member, and a phenolic resin foamed material or article having the above properties.

The present inventors have made diligent studies to develop a phenolic resin foamed article having the above properties. As a result, it has been found that the above object can be achieved by using, as a material, a foamable phenolic resin forming material that contains a liquid resol type phenolic resin, a blowing agent, a foam stabilizer and an acid curing agent and that also contains a nitrogen-containing bridged cyclic compound, and on the basis of this finding, the present invention has been completed.

That is, the present invention provides
(1) a foamable resol type phenolic resin forming material comprising a liquid resol type phenolic resin, a blowing agent, a foam stabilizer, an additive and an acid curing agent, said blowing agent comprising an organic non-reactive blowing agent and said additive comprising a nitrogen-containing bridged cyclic compound,
(2) a foamable resol type phenolic resin forming material as recited in the above (1), which contains 0.1 to 10 parts by mass, per 100 parts by mass of the liquid resol type phenolic resin, of the nitrogen-containing bridged cyclic compound,
(3) a foamable resol type phenolic resin forming material as recited in the above (1), wherein the nitrogen-containing bridged cyclic compound is at least one member selected from quinuclidine, pydine and hexamethylenetetramine,
(4) a foamable resol type phenolic resin forming material as recited in the above (1), which further contains, as an inorganic filler, aluminum hydroxide and/or calcium carbonate,
(5) a foamable resol type phenolic resin forming material as recited in the above (1), wherein the liquid resol type phenolic resin is a resin obtained by reacting a phenol and formaldehyde at a molar ratio of from 1.0:1.5 to 1.0:3.0 under alkaline conditions and has a viscosity, measured at 25°C, of 1,000 to 80,000 mPa·s, a water content of 3 to 16 mass% and a number average molecular weight of 300 to 700,
(6) a phenolic resin foamed material or article that is a product obtained by foaming and curing a foamable resol type phenolic resin forming material comprising a liquid resol type phenolic resin, a blowing agent, a foam stabilizer, an additive and an acid curing agent, said blowing agent comprising an organic non-reactive blowing agent and said additive comprising a nitrogen-containing bridged cyclic compound,
(7) a phenolic resin foamed material or article as recited in the above (6), wherein the foamable resol type phenolic resin forming material contains 0.1 to 10 parts by mass, per 100 parts by mass of the liquid resol type phenolic resin, of the nitrogen-containing bridged cyclic compound,
(8) a phenolic resin foamed material or article as recited in the above (6), wherein the nitrogen-containing bridged cyclic compound is at least one member selected from quinuclidine, pydine and hexamethylenetetramine,
(9) a phenolic resin foamed material or article as recited in the above (6), wherein the foamable resol type phenolic resin forming material further contains, as an inorganic filler, aluminum hydroxide and/or calcium carbonate,
(10) a phenolic resin foamed material or article as recited in the above (6), wherein the liquid resol type phenolic resin is a resin obtained by reacting a phenol and formaldehyde at a molar ratio of from 1.0:1.5 to 1.0:3.0 under alkaline conditions and has a viscosity, measured at 25°C, of 1,000 to 80,000 mPa·s, a water content of 3 to 16 mass% and a number average molecular weight of 300 to 700,
(11) a phenolic resin foamed material or article as recited in the above (6), which has an average cell diameter of 5 to 400 µm, a density of 10 kg/m³ or more and a pH of 4.0 or more,
(12) a phenolic resin foamed material or article as recited in the above (6), which has a brittleness of 20 % or less,
(13) a phenolic resin foamed material or article as recited in the above (6), which has an average cell diameter of 5 to 400 µm, a density of 10 kg/m³ or more, a pH of 4.0 or more and a brittleness of 20 % or less,
(14) a phenolic resin foamed material or article as recited in the above (6), which has a face material provided on at least one surface thereof, and
(15) a phenolic resin foamed material or article as recited in the above (14), wherein the face material is selected from a glass fiber nonwoven fabric, a spunbonded nonwoven fabric, an aluminum-foil-bonded nonwoven fabric, a metal plate, a metal foil, a plywood, a calcium silicate plate, a plaster board and a wood-fiber-based cement plate.

According to the present invention, there can be provided a foamable resol type phenolic resin forming material that gives a phenolic resin foamed material or article which is excellent in strength and improved in brittleness and which has a high pH as compared with conventional materials or articles and has an excellent anti-corrosion property against a contact member and a phenolic resin foamed material or article having the above properties, obtained by foaming the above material.

### Preferred Embodiments of the Invention

First, the foamable resol type phenolic resin forming material of the present invention will be explained.

The foamable resol type phenolic resin forming material of the present invention contains a liquid resol type phenolic resin, a blowing agent, a foam stabilizer, an additive and an acid curing agent and contains an inorganic filler as required.

The above resol type phenolic resin includes phenolic resins obtained by reacting phenols such as phenol, cresol, xylenol, p-alkylphenol, p-phenylphenol, resorcin, etc., or modified products thereof with aldehydes such as formaldehyde, para-formaldehyde, furfural, acetaldehyde, etc., in the presence of a catalytic amount of alkalis such as sodium hydroxide, potassium hydroxide, calcium hydroxide, etc., while the resol type phenolic resin shall not be limited thereto. The amount ratio of the phenols and the aldehydes to be used is not specially limited, while the amount ratio of a phenol and an aldehyde by molar ratio is generally from approximately 1.0:1.5 to 1.0:3.0, preferably from 1.0:1.8 to 1.0:2.5.

The above liquid resol type phenolic resin is in particular a resin obtained by reacting phenol and formaldehyde at a molar ratio of from 1.0:1.5 to 1.0:3.0, preferably from 1.0:1.8 to 1.0:2.5 under alkaline conditions, and the thus-obtained resin having a viscosity, measured at a temperature of 25°C, of 1,000 to 80,000 mPa·s, preferably 7,000 to 50,000 mPa·s, a water content of 5 to 16 mass% and a number average molecular weight of 300 to 700 is preferred since such a resin can give a phenolic resin foamed material or article having desired properties.

In the present invention, the blowing agent can be selected, for example, from agents containing organic non-reactive blowing agents such as low-boiling-point hydrocarbons including propane, butane, pentane, hexane, heptane, cyclopropane, cyclobutane, cyclopentane, cyclohexane, cycloheptane, etc., ethers including isopropyl ether, etc., fluorine compounds including trichloromonofluoromethane, trichlorotrifluoroethane, etc., or mixtures of these. The "non-reactive blowing agent" as used herein refers to a substance that can volatilize per se and cause a phenolic resin to foam under foaming conditions.

In the present invention, the amount of the above blowing agent to be used per 100 parts by mass of the above liquid resol type phenolic resin is generally 1 to 20 parts by mass, preferably 5 to 10 parts by mass. Besides the above blowing agents, gases such as nitrogen gas, oxygen gas, argon gas, carbon dioxide gas, etc., or mixtures of these gases may be used.

The foam stabilizer for use in the present invention is preferably selected, for example, from nonionic surfactants such as a polysiloxane-containing surfactant, polyoxyethylene sorbitan fatty acid ester, castor oil ethylene oxide (to be referred to as "EO" hereinafter), etc. These may be used singly or in combination of the two or more of them.

For example, when a polysiloxane-containing surfactant is used as a foam stabilizer, the content of the foam stabilizer in the foamable phenolic resin forming material per 100 parts by mass of the liquid resol phenolic resin is preferably 1 to 5 parts by mass, more preferably 2 to 4 parts by mass. When the content of the foam stabilizer is less than 1 part by mass, uniformly small cells are not easily formed. When it exceeds 5 parts by mass, a generated phenolic resin foamed material or article has increased water absorptivity and a production cost is increased.

In the present invention, a nitrogen-containing bridged cyclic compound is used as the above additive. When this nitrogen-containing bridged cyclic compound is incorporated into the foamable phenolic resin forming material, it has been found that the above nitrogen compound exhibits unexpected effects that a phenolic resin foamed material or article obtained is improved in mechanical strength and brittleness and further that it imparts the phenolic resin foamed material or article with an anti-corrosion property, etc.

Examples of the above nitrogen-containing bridged cyclic compound include quinuclidine, pydine and hexamethylenetetramine, etc., and these may be used singly or in combination of the two or more of them. Of these, hexamethylenetetramine is preferred in view of an effect and easy availability.

From the viewpoint of a balance between an effect and economic performance, the amount of the above nitrogen-containing bridged cyclic compound per 100 parts by mass of the above liquid resol type phenol resin is preferably 0.1 to 10 parts by mass, more preferably 0.3 to 7 parts by mass.

In the present invention, the above acid curing agent is selected, for example, from inorganic acids such as sulfuric acid, phosphoric acid, etc., and organic acids such as benzenesulfonic acid, ethylbenzenesulfonic acid, p-toluenesulfonic acid, xylenesulfonic acid, naphtholsulfonic acid, phenolsulfonic acid, etc. These curing agents may be used singly or in combination of the two or more of them.

The inorganic filler that is used as required in the present invention can give a phenolic resin foamed material or article which has low acidity and which is improved in fire resistant properties. The amount of the inorganic filler to be used per 100 parts by mass of the above liquid resol type phenolic resin is generally 0.1 to 30 parts by mass, preferably 1 to 10 parts by mass.

The above inorganic filler that can be incorporated can be selected, for example, from metal hydroxides or oxides such as aluminum hydroxide, magnesium hydroxide, calcium oxide, magnesium oxide, aluminum oxide, zinc oxide, etc., metal powders of zinc, etc., and metal carbonates such as calcium carbonate, magnesium carbonate, barium carbonate, zinc carbonate, etc. These inorganic fillers may be used singly or in combination of the two or more of them. Of these inorganic fillers, aluminum hydroxide and/or calcium carbonate are/is preferred.

In the above-described manner, the foamable resol type phenolic resin forming material of the present invention can be prepared.

The phenolic resin foamed material or article of the present invention will be explained below.

The phenolic resin foamed material or article of the present invention is obtained by foaming and curing the foamable resol type phenolic resin forming material of the present invention prepared in the above-described manner. Examples of the method for forming the above phenolic resin foamed material or article include (1) a method in which the foamable resol type phenolic resin forming material is caused to flow out on an endless conveyor, (2) a method in which the above forming material is caused to flow out partially to foam it, (3) a method in which the above forming material is foamed under pressure in a mold, (4) a method in which the above forming material is charged into a certain large space to form a foamed block and (5) a method in which the above forming material is charged and foamed while it is introduced into a hollow space under pressure.

In a preferred method, the above foamable resol type phenolic resin forming material is ejected onto a carrier that is continuously moving, the thus-ejected material is passed through a heating zone to foam it and also to shape it, whereby a desired phenolic resin foamed material or article is produced. Specifically, the above foamable resol type phenolic resin forming material is ejected on a face material on a conveyor belt. Then, another face material is placed on the forming material on the conveyor belt and the resultant set is introduced into a curing furnace. In the curing furnace, the set is pressed with other conveyor belt to adjust the phenolic resin foaming material to a predetermined thickness, and the foaming material is foamed and cured under conditions of preferably 90°C or lower, more preferably approximately 60 to 80°C, and approximately 2 to 20 minutes. The phenolic resin foamed material that comes out of the curing furnace is cut to a predetermined length.

The above face material is not specially limited, and it can be generally selected from nonwoven fabrics of natural fibers, synthetic fibers such as a polyester fiber, a polyethylene fiber, etc., or inorganic fibers such as a glass fiber, papers, an aluminum-foil-bonded nonwoven fabric, a metal plate and a metal foil. A glass fiber nonwoven fabric, a spunbonded nonwoven fabric, an aluminum-foil-bonded nonwoven fabric, a metal plate, a metal foil, a plywood, a construction panel, a particle board, a hard board, a wood-fiber-based cement plate, a flexible plate, a perlite plate, a calcium silicate plate, a magnesium carbonate plate, a pulp cement plate, a sheathing board, a medium density fiber board, a plaster board, a lath sheet, a volcanic vitreous composite plate, natural stone, a brick, a tile, a glass shaped material, a light-weight cellular concrete shaped material, a cement mortar shaped material and a shaped material using a water-curable cement hydrate as a binder component such as a glass-fiber-reinforced cement shaped material, etc., are preferred. These materials may be used singly or in combination of the two or more of them. Of these, it is particularly preferred to use at least one selected from a glass fiber nonwoven fabric, a spunbonded nonwoven fabric, an aluminum-foil-bonded nonwoven fabric, a metal plate, a metal foil, a plywood, a calcium silicate plate, a plaster board and a wooden-fiber-based cement plate. The face material may be provided on one surface of the phenolic resin foamed material or article or such face materials are provided on both surfaces thereof. When the face materials are provided on both surfaces thereof, they may be different. Further, the face material(s) may be later bonded to the surface(s) of the phenolic resin foamed material with an adhesive.

In the phenolic resin foamed material or article of the present invention, desirably, the average cell diameter thereof is 5 to 400 µm, preferably 50 to 200 µm, and the area ratio of voids formed in any cross-sectional area of the foamed material or article is generally 5 % or less, preferably 2 % or less.

Further, desirably, the density thereof is 10 kg/m³ or more, preferably 20 to 100 kg/m³, and the pH thereof is generally 4.0 or more, preferably 5.0 to 8.0.

Further, desirably, the brittleness thereof is generally 20 % or less, more preferably 10 to 18 %.

Methods for measurements of phenolic resin foamed materials for the above properties will be explained in detail later.

### Examples

The present invention will be explained in detail with reference to Examples hereinafter, while the present invention shall not be limited by these Examples.

Phenolic resin foamed materials obtained in Examples were measured for physical properties according to the following methods.

### (1) Density

Measured according to JIS A 9511:2003,5.6 density.

### (2) Brittleness

Measured according to a JIS A 9511:2003,5.14 brittleness test.

### (3) pH

0.5 Gram of a phenolic resin foamed material sample finely pulverized to 250 µm or less (60 mesh) with a mortar, etc., is weighed and placed in a 200 ml Erlenmeyer flask with a ground-in stopper, 100 ml of pure water is added, and the flask is hermetically stoppered. After such a mixture was stirred with a magnetic stirrer at room temperature (23 ±5°C) for 7 days, it was measured with a pH meter.

### (4) Average cell diameter

Four straight lines having a length of 9 cm each were drawn on a 50 times enlarged photograph of inside of a phenolic resin foamed sample, cells that the straight lines were drawn across were counted per straight line and 1800 µm was divided by an average value thereof (number of cells measured according to JIS K6402) to obtain a value, which was used as an average cell diameter.

### (5) Voids

A phenolic resin foamed material sample was cut nearly in the center along its thickness direction in parallel with its front and back surfaces, a 200 % enlarged color copy of a 100 mm x 150 mm range was made (double in length and four times in area), a transparent section paper was used to count void areas occupying at least 8 squares having an area of 1 mm x 1 mm each, and an area percentage was calculated. That is, since the enlarged copy was made, the above 8 squares corresponded to an area of 2 mm² in the actual foam cross section.

### (6) Compressive strength

Measured according to JIA A 9511.

### (7) Anti-corrosion property

A 300 x 300 mm galvanized iron plate (thickness 1 mm, a plating amount 120 g/m²) was provided, and a phenolic resin foamed material sample having the same size was placed on the galvanized iron plate and fixed thereto so that it did not slip off, to prepare a test material. The test material was placed and left under an accelerated environment of 40°C and 100 %RH for 24 weeks, and thereafter it was visually observed for corrosion in a contact surface of the galvanized iron plate and the sample.

### (8) Viscosity

Measured with a Brookfield rotational viscometer at a testing temperature of 25°C according to JIS K 7117-1.

### (9) Water content

Measured according to JIS K 6910 7.24 water content (Karl Fischer automatic volume titration method).

### (10) Number average molecular weight

A 0.2 mass% solution was prepared with tetrahydrofuran and measured with gel permeation chromatography using a Shodex GPC KF-802 column.

### Example 1

A three-necked flask having a reflux condenser, a thermometer and a stirrer was charged with 1,600 g of phenol, 2,282 g of 47 mass% formalin and 41.6 g of a 50 mass% sodium hydroxide aqueous solution, and a reaction was carried out at 80°C for 80 minutes. The reaction mixture was cooled to 40°C, neutralized with a 50 mass% p-toluenesulfonic acid aqueous solution and dehydration-concentrated under reduced pressure and heat up to a water content of 8.0 mass%, to give 2,830 g of a liquid resol type phenolic resin. This resin had a viscosity of 30,000 mPa-s/25°C, a water content of 8.2 mass% and a number average molecular weight of 400.

100 Parts by mass of the liquid resol type phenolic resin was mixed with 3 parts by mass of a silicone-containing foam stabilizer (trade name "L-5420", supplied by Nippon Unicar Company, Ltd.) and 3.5 parts by mass of hexamethylenetetramine as an additive, and the mixture was temperature-adjusted to 15°C.

The above mixture was stirred and mixed with 8 parts by mass of cyclopentane (trade name "MARUKASOL FH", supplied by Maruzen Petrochemical Co., Ltd.) as a blowing agent and 13 parts by mass of xylenesulfonic acid (trade name "TAYCA TOX110" supplied by TAYCA K.K.) as a curing agent in a pin mixer, to prepare a foamable resol type phenolic resin forming material. Thereafter, this forming material was ejected into a frame with a glass nonwoven fabric set therein, the frame with the forming material in it was placed in a dryer at 80°C for 15 minutes and a phenolic resin foamed material was shaped. Table 1 shows the physical properties of this foamed material.

### Example 2

A phenolic resin foamed material was produced in the same manner as in Example 1 except that 2 parts by mass of calcium carbonate was added as an inorganic filler and that the amount of the curing agent was changed to 18 parts by mass. Table 1 shows the physical properties of this foamed material.

### Example 3

A phenolic resin foamed material was produced in the same manner as in Example 1 except that the amount of hexamethylenetetramine in Example 2 was changed to 7 parts by mass. Table 1 shows the physical properties of this foamed material.

### Example 4

A phenolic resin foamed material was produced in the same manner as in Example 1 except that the blowing agent in Example 2 was replaced with hydrofluorocarbon HFC-365mfc (supplied by Nippon Solvay K.K.). Table 1 shows the physical properties of this foamed material.

### Comparative Example 1

A phenolic resin foamed material was produced in the same manner as in Example 1 except that the hexamethylenetetramine in Example 1 was not added. Table 1 shows the physical properties of this foamed material.

**Table 1**

| | Density (kg/m³) | Brittleness (%) | p H | Average cell diameter (µm) | Voids (%) | Anti-corrosion property | Compressive Strength (N/cm²) |
|---|---|---|---|---|---|---|---|
| Ex. 1 | 30 | 13 | 4.2 | 100 | 1.0 | No problems | 20 |
| Ex. 2 | 30 | 15 | 6.2 | 100 | 1.0 | No problems | 19 |
| Ex. 3 | 30 | 14 | 7.3 | 110 | 1.1 | No problems | 19 |
| Ex. 4 | 30 | 14 | 6.5 | 100 | 1.2 | No problems | 20 |
| CEx. 1 | 30 | 35 | 2.7 | 100 | 1.0 | Red rust occurred on all over the surface | 9 |

| | | | | | | | |
|---|---|---|---|---|---|---|---|
| Ex. = Example CEx.= Comparative Example | | | | | | | |

### Industrial Utility

Owing to the use of a nitrogen-containing bridged cyclic compound, the phenolic resin foamed material or article of the present invention is improved in mechanical strength and brittleness, and further it is imparted with good anti-corrosion property against a contact member.

## Claims

1. A foamable resol type phenolic resin forming material comprising a liquid resol type phenolic resin, a blowing agent, a foam stabilizer, an additive, an acid curing agent and an inorganic filler, said blowing agent comprising an organic non-reactive blowing agent and said additive comprising a nitrogen-containing bridged cyclic compound.

2. The foamable resol type phenolic resin forming material as recited in claim 1, which contains 0.1 to 10 parts by mass, per 100 parts by mass of the liquid resol type phenolic resin, of the nitrogen-containing bridged cyclic compound.

3. The foamable resol type phenolic resin forming material as recited in claim 1, wherein the nitrogen-containing bridged cyclic compound is at least one member selected from quinuclidine, pydine and hexamethylenetetramine.

4. The foamable resol type phenolic resin forming material as recited in claim 1, which further contains, as an inorganic filler, aluminum hydroxide and/or calcium carbonate.

5. The foamable resol type phenolic resin forming material as recited in claim 1, wherein the liquid resol type phenolic resin is a resin obtained by reacting a phenol and formaldehyde at a molar ratio of from 1.0:1.5 to 1.0:3.0 under alkaline conditions and has a viscosity, measured at 25°C, of 1,000 to 80,000 mPa·s, a water content of 3 to 16 mass% and a number average molecular weight of 300 to 700.

6. A phenolic resin foamed material or article that is a product obtained by foaming and curing a foamable resol type phenolic resin forming material comprising a liquid resol type phenolic resin, a blowing agent, a foam stabilizer, an additive, an acid curing agent and an inorganic filler, said blowing agent comprising an organic non-reactive blowing agent and said additive comprising a nitrogen-containing bridged cyclic compound.

7. The phenolic resin foamed material or article as recited in claim 6, wherein the foamable resol type phenolic resin forming material contains 0.1 to 10 parts by mass, per 100 parts by mass of the liquid resol type phenolic resin, of the nitrogen-containing bridged cyclic compound.

8. The phenolic resin foamed material or article as recited in claim 6, wherein the nitrogen-containing bridged cyclic compound is at least one member selected from quinuclidine, pydine and hexamethylenetetramine.

9. The phenolic resin foamed material or article as recited in claim 6, wherein the foamable resol type phenolic resin forming material further contains, as an inorganic filler, aluminum hydroxide and/or calcium carbonate.

10. The phenolic resin foamed material or article as recited in claim 6, wherein the liquid resol type phenolic resin is a resin obtained by reacting a phenol and formaldehyde at a molar ratio of from 1.0:1.5 to 1.0:3.0 under alkaline conditions and has a viscosity, measured at 25°C, of 1,000 to 80,000 mPa·s, a water content of 3 to 16 mass% and a number average molecular weight of 300 to 700.

11. The phenolic resin foamed material or article as recited in claim 6, which has an average cell diameter of 5 to 400 µm, a density of 10 kg/m³ or more and a pH of 4.0 or more.

12. The phenolic resin foamed material or article as recited in the claim 6, which has a brittleness of 20 % or less.

13. The phenolic resin foamed material or article as recited in claim 6, which has an average cell diameter of 5 to 400 µm, a density of 10 kg/m³ or more, a pH of 4.0 or more and a brittleness of 20 % or less.

14. The phenolic resin foamed material or article as recited in claim 6, which has a face material provided on at least one surface thereof.

15. The phenolic resin foamed material or article as recited in the claim 14, wherein the face material is selected from a glass fiber nonwoven fabric, a spunbonded nonwoven fabric, an aluminum-foil-bonded nonwoven fabric, a metal plate, a metal foil, a plywood, a calcium silicate plate, a plaster board and a wood-fiber-based cement plate.

## Patentansprüche

1. Schäumbares Resoltyp-Phenolharz-Formmaterial, umfassend ein flüssiges Resoltyp-Phenolharz, ein Treibmittel, einen Schaumstabilisator, ein Additiv, ein Säurehärtungsmittel und einen anorganischen Füllstoff, wobei das Treibmittel ein organisches nichtreaktives Treibmittel umfasst, und das Additiv eine stickstoffhaltige verbrückte cyclische Verbindung umfasst.

2. Schäumbares Resoltyp-Phenolharz-Formmaterial gemäß Anspruch 1, welches 0,1 bis 10 Massenteile der stickstoffhaltigen verbrückten cyclischen Verbindung pro 100 Massenteile des flüssigen Resoltyp-Phenolharzes enthält.

3. Schäumbares Resoltyp-Phenolharz-Formmaterial gemäß Anspruch 1, wobei die stickstoffhaltige verbrückte cyclische Verbindung mindestens ein Mitglied ist, ausgewählt aus Chinuclidin, Pydin und Hexamethylentetramin.

4. Schäumbares Resoltyp-Phenolharz-Formmaterial gemäß Anspruch 1, welches des Weiteren als anorganischen Füllstoff Aluminiumhydroxid und/oder Calciumcarbonat enthält.

5. Schäumbares Resoltyp-Phenolharz-Formmaterial gemäß Anspruch 1, wobei das flüssige Resoltyp-Phenolharz ein Harz ist, erhalten durch Umsetzen eines Phenols und Formaldehyd bei einem Molverhältnis von 1,0:1,5 bis 1,0:3,0 unter alkalischen Bedingungen, und eine Viskosität, gemessen bei 25°C von 1.000 bis 80.000 mPa·s, einen Wassergehalt von 3 bis 16 Massenprozent und ein zahlenmittleres Molekulargewicht von 300 bis 700 besitzt.

6. Geschäumtes Phenolharzmaterial oder -gegenstand, welcher bzw. welches ein Produkt ist, erhalten durch Schäumen und Härten eines schäumbaren Resoltyp-Phenolharz-Formmaterials, umfassend ein flüssiges Resoltyp-Phenolharz, ein Treibmittel, einen Schaumstabilisator, ein Additiv, ein Säurehärtungsmittel und einen anorganischen Füllstoff, wobei das Treibmittel ein organisches nichtreaktives Treibmittel umfasst, und das Additiv eine stickstoffhaltige verbrückte cyclische Verbindung umfasst.

7. Geschäumtes Phenolharzmaterial oder -gegenstand gemäß Anspruch 6, wobei das schäumbare Resoltyp-Phenolharz-Formmaterial 0,1 1 bis 10 Massenteile der stickstoffhaltigen verbrückten cyclischen Verbindung pro 100 Massenteile des flüssigen Resoltyp-Phenolharzes enthält.

8. Geschäumtes Phenolharzmaterial oder -gegenstand gemäß Anspruch 6, wobei die stickstoffhaltige verbrückte cyclische Verbindung mindestens ein Mitglied ist, ausgewählt aus Chinuclidin, Pydin und Hexamethylentetramin.

9. Geschäumtes Phenolharzmaterial oder -gegenstand gemäß Anspruch 6, wobei das schäumbare Resoltyp-Phenolharz-Formmaterial des weiteren als anorganischen Füllstoff Aluminiumhydroxid und/oder Calciumcarbonat enthält.

10. Geschäumtes Phenolharzmaterial oder -gegenstand gemäß Anspruch 6, wobei das flüssige Resoltyp-Phenolharz ein Harz ist, erhalten durch Umsetzen eines Phenols und Formaldehyd bei einem Molverhältnis von 1,0:1,5 bis 1,0:3,0 unter alkalischen Bedingungen, und eine Viskosität, gemessen bei 25°C, von 1.000 bis 80.000 mPa·s, einen Wassergehalt von 3 bis 16 Massenprozent und ein zahlenmittleres Molekulargewicht von 300 bis 700 besitzt.

11. Geschäumtes Phenolharzmaterial oder -gegenstand gemäß Anspruch 6, welches bzw. welcher einen durchschnittlichen Zellendurchmesser von 5 bis 400 µm, eine Dichte von 10 kg/m³ oder mehr und einen pH von 4,0 oder mehr besitzt.

12. Geschäumtes Phenolharzmaterial oder -gegenstand gemäß Anspruch 6, welches bzw. welcher eine Brüchigkeit von 20% oder weniger aufweist.

13. Geschäumtes Phenolharzmaterial oder -gegenstand gemäß Anspruch 6, welches bzw. welcher einen durchschnittlichen Zellendurchmesser von 5 bis 400 µm, eine Dichte von 10 kg/m³ oder mehr, einen pH von 4,0 oder mehr und eine Brüchigkeit von 20% oder weniger aufweist.

14. Geschäumtes Phenolharzmaterial oder -gegenstand gemäß Anspruch 6, welches bzw. welcher ein Obermaterial, angebracht auf mindestens einer Oberfläche davon, aufweist.

15. Geschäumtes Phenolharzmaterial oder -gegenstand gemäß Anspruch 14, wobei das Obermaterial ausgewählt ist aus Glasfaservlies, Spinnvlies, Aluminiumfolie-gebundenem Vlies, einer Metallplatte, einer Metallfolie, einem Sperrholz, einer Calciumsilicatplatte, einer Kartonplatte und einer Zementplatte auf Holzfaserbasis.

## Revendications

1. Matériau pouvant former une résine phénolique expansible de type résol comprenant une résine phénolique liquide de type résol, un agent d'expansion, un agent de stabilisation de la mousse, un additif, un agent de durcissement acide et une charge inorganique, ledit agent d'expansion comprenant un agent d'expansion organique non réactif et ledit additif comprenant un composé cyclique ponté contenant de l'azote.

2. Matériau pouvant former une résine phénolique expansible de type résol selon la revendication 1, contenant de 0,1 à 10 parties en poids, pour 100 parties en poids de la résine phénolique liquide de type résol, du composé cyclique ponté contenant de l'azote.

3. Matériau pouvant former une résine phénolique expansible de type résol selon la revendication 1, dans lequel le composé cyclique ponté contenant de l'azote est au moins un élément choisi parmi la quinuclidine, la pydine et l'hexaméthylène-tétramine.

4. Matériau pouvant former une résine phénolique expansible de type résol selon la revendication 1,
contenant en outre, comme charge inorganique, de l'hydroxyde d'aluminium et/ou du carbonate de calcium.

5. Matériau pouvant former une résine phénolique expansible de type résol selon la revendication 1, dans lequel la résine phénolique liquide de type résol est une résine obtenue en faisant réagir un phénol et un formaldéhyde avec un rapport molaire allant de 1,0 : 1,5 à 1, 0 : 3;0 dans des conditions alcalines et présente une viscosité, mesurée à 25 °C, allant de 1 000 à 80 000 mPa*s, une teneur en eau allant de 3 à 16 % en poids et un poids moléculaire moyen en nombre allant de 300 à 700.

6. Matériau ou article en mousse de résine phénolique qui est un produit obtenu en réalisant l'expansion et le durcissement d'un matériau pouvant former une résine phénolique expansible de type résol comprenant une résine phénolique liquide de type résol, un agent d'expansion, un agent de stabilisation de la mousse, un additif, un agent de durcissement acide et une charge inorganique, ledit agent d'expansion comprenant un agent d'expansion organique non réactif et ledit additif comprenant un composé cyclique ponté contenant de l'azote.

7. Matériau ou article en mousse de résine phénolique selon la revendication 6, dans lequel le matériau pouvant former la résine phénolique expansible de type résol contient de 0,1 à 10 parties en poids, pour 100 parties en poids de la résine phénolique liquide de type résol, du composé cyclique ponté contenant de l'azote.

8. Matériau ou article en mousse de résine phénolique selon la revendication 6, dans lequel le composé cyclique ponté contenant de l'azote est au moins un élément choisi parmi la quinuclidine, la pydine et l'hexaméthylène-tétramine.

9. Matériau ou article en mousse de résine phénolique selon la revendication 6, dans lequel le matériau pouvant former la résine phénolique expansible de type résol contient en outre, comme charge inorganique, de l'hydroxyde d'aluminium et/ou du carbonate de calcium.

10. Matériau ou article en mousse de résine phénolique selon la revendication 6, dans lequel la résine phénolique liquide de type résol est une résine obtenue en faisant réagir un phénol et un formaldéhyde avec un rapport molaire allant de 1,0 : 1,5 à 1,0 : 3;0 dans des conditions alcalines et présente une viscosité, mesurée à 25 °C, allant de 1 000 à 80 000 mPa*s, une teneur en eau allant de 3 à 16 % en poids et un poids moléculaire moyen en nombre allant de 300 à 700.

11. Matériau ou article en mousse de résine phénolique selon la revendication 6, qui présente un diamètre moyen de cellule allant de 5 à 400 µm, une densité supérieure ou égale à 10 kg/m³ et un pH supérieur ou égal à 4,0.

12. Matériau ou article en mousse de résine phénolique selon la revendication 6, qui présente une fragilité inférieure ou égale à 20 %.

13. Matériau ou article en mousse de résine phénolique selon la revendication 6, qui présente un diamètre moyen de cellule allant de 5 à 400 µm, une
densité supérieure ou égale à 10 kg/m³, un pH supérieur ou égal à 4,0, et une fragilité inférieure ou égale à 20 %.

14. Matériau ou article en mousse de résine phénolique selon la revendication 6, qui présente un matériau de parement sur au moins une de ses surfaces.

15. Matériau ou article en mousse de résine phénolique selon la revendication 14, dans lequel le matériau de parement est choisi parmi un textile non tissé de fibre de verre, un textile non tissé par filage direct, un textile non tissé contrecollé sur feuille d'aluminium, une plaque métallique, une feuille métallique, un panneau de contreplaqué, une plaque de silicate de calcium, une plaque de plâtre et une plaque de ciment à base de fibre de bois.
